# EUROPÄISCHE PATENTANMELDUNG

(11) **EP 2 060 712 A2**
(43) Veröffentlichungstag der Anmeldung: **20.05.2009**
(21) Anmeldenummer: 08016325.6
(22) Anmeldetag: 17.09.2008
(51) Int. Cl.: E05B 65/20, E05B 47/00, B60P 3/32

(54) **Wohnfahrzeugtürvorrichtung, insbesondere Wohnmobiltürvorrichtung**

(30) Priorität: 13.11.2007 DE 202007015801 U
(71) Anmelder: Wichelhaus, Günter, Dr., 88356 Ostrach (DE)
(72) Erfinder: Wichelhaus, Günter, Dr., 88356 Ostrach (DE)
(74) Vertreter: Daub, Thomas

(57) **Zusammenfassung**

Die Erfindung geht aus von einer Wohnfahrzeugtürvorrichtung, insbesondere Wohnmobiltürvorrichtung, mit einer Schließvorrichtung (10), die dazu vorgesehen ist, eine Wohnfahrzeugtür (12) in einer Ausnehmung (14) einer Wohnfahrzeugseitenwand (16) zu halten, und die wenigstens eine Antriebseinheit (18) aufweist, die dazu vorgesehen ist, die Wohnfahrzeugtür (12) in ihre Schließposition zu bewegen.

Es wird vorgeschlagen, dass die Antriebseinheit (18) dazu vorgesehen ist, an der Wohnfahrzeugseitenwand (16) angeordnet zu werden.

## Beschreibung

### Stand der Technik

Die Erfindung geht aus von einer Wohnmobiltürvorrichtung nach dem Oberbegriff des Anspruchs 1.

Es ist bereits eine Wohnfahrzeugtürvorrichtung mit einer Schließvorrichtung bekannt, die dazu vorgesehen ist, eine Wohnfahrzeugtür in einer Ausnehmung einer Wohnfahrzeugseitenwand zu halten bzw. zu verriegeln, und die eine Antriebseinheit aufweist, die dazu vorgesehen ist, die Wohnfahrzeugtür in ihre Schließposition zu bewegen. Die Antriebseinheit ist dabei an der Wohnfahrzeugtür angeordnet.

### Vorteile der Erfindung

Die Erfindung geht aus von einer Wohnfahrzeugtürvorrichtung, insbesondere einer Wohnmobiltürvorrichtung, mit einer Schließvorrichtung, die dazu vorgesehen ist, eine Wohnfahrzeugtür in einer Ausnehmung einer Wohnfahrzeugseitenwand zu halten, und die wenigstens eine Antriebseinheit aufweist, die dazu vorgesehen ist, die Wohnfahrzeugtür in ihre Schließposition zu bewegen.

Es wird vorgeschlagen, dass die Antriebseinheit dazu vorgesehen ist, an der Wohnfahrzeugseitenwand, d.h. in einem Bereich außerhalb der Wohnfahrzeugtür, insbesondere an einem angrenzenden Wandbereich, angeordnet zu werden. Dabei soll unter "vorgesehen" insbesondere speziell ausgestattet, ausgelegt und/oder programmiert verstanden werden. Unter einer "Schließvorrichtung" soll dabei insbesondere eine Einheit verstanden werden, die dazu vorgesehen ist, die Wohnfahrzeugtür formschlüssig zu verriegeln und hierzu insbesondere ein beweglich gelagertes Verriegelungselement und ein starres Verriegelungselement aufweist, wobei insbesondere das beweglich gelagerte Verriegelungselement von der Antriebseinheit antreibbar ist. Ferner soll unter einer "Antriebseinheit" insbesondere eine Einheit verstanden werden, die zum Antrieb der Wohnfahrzeugtür über einen Schwenkwinkel vorgesehen ist, der wesentlich kleiner ist als ein Gesamtschwenkwinkel der Wohnfahrzeugtür, insbesondere kleiner als 10% eines Gesamtschwenkwinkels.

Durch eine entsprechende Ausgestaltung kann das an der Wohnfahrzeugtür durch die Schließvorrichtung bedingte, anlastende Gewicht vorteilhaft reduziert werden, und zwar insbesondere, wenn die Wohnfahrzeugtürvorrichtung wenigstens eine an der Wohnfahrzeugtür angeordnete Schlosseinheit aufweist, insbesondere eine relativ zur Wohnfahrzeugtür unbeweglich gelagerte Schlosseinheit, die zur Korrespondenz mit einer von der Antriebseinheit antreibbaren Schlosseinheit vorgesehen ist.

Ferner kann besonders vorteilhaft bei einer Wohnfahrzeugtür mit einem Fensterelement ein besonders breites Fensterelement erreicht werden, und zwar vorzugsweise ein Fensterelement, das einen Abstand zu einem der Antriebseinheit zugewandten Seitenrand der Wohnfahrzeugtür aufweist, der kleiner als 150 mm ist, bevorzugt kleiner als 80 mm ist und besonders bevorzugt kleiner als 40 mm ist.

Durch eine entsprechende Ausgestaltung kann eine vorteilhafte Durchsicht durch die Wohnfahrzeugtür erreicht werden, was insbesondere zu einer wesentlichen Komfortsteigerung führt, wenn die Wohnfahrzeugtür von einer Fahrkabinentür gebildet ist, die neben einem Beifahrersitz oder besonders vorteilhaft neben einem Fahrersitz angeordnet ist, es sich also um eine fahrerseitige Fahrkabinentür handelt.

In einer weiteren Ausgestaltung der Erfindung wird vorgeschlagen, dass die Wohnfahrzeugtürvorrichtung ein Versteifungsmittel zur Versteifung der Wohnfahrzeugseitenwand aufweist, wodurch eine vorteilhafte Versteifung der Wohnfahrzeugtür erreicht und unerwünschte Klappergeräusche vermieden werden können, und zwar insbesondere, wenn das Versteifungsmittel eine Länge größer als eine halbe Wohnfahrzeugtürlänge der Wohnfahrzeugtür aufweist.

Ist das Versteifungsmittel zumindest teilweise einstückig mit einem Abdeckmittel ausgeführt, das dazu vorgesehen ist, das Antriebsmittel abzudecken, können zusätzliche Bauteile, Montageaufwand und Kosten eingespart werden.

In einer weiteren Ausgestaltung der Erfindung wird vorgeschlagen, dass die Schließvorrichtung wenigstens ein Drehfallenschloss aufweist, und die Antriebseinheit dazu vorgesehen ist, das Drehfallenschloss, und zwar insbesondere einen schwenkbar gelagerten Riegel des Drehfallenschlosses, anzutreiben und insbesondere dazu vorgesehen ist, über das Drehfallenschloss die Wohnfahrzeugtür in seine Schließstellung zu ziehen. Durch eine entsprechende Ausgestaltung kann ein konstruktiv einfacher und besonders sicherer Schließmechanismus erreicht werden.

Weist die Schließvorrichtung wenigstens zwei Schlosseinheiten auf, die dazu vorgesehen sind, an zumindest zwei differierenden Stellen der Wohnfahrzeugtür formschlüssige Verriegelungen zu bewirken, kann eine besonders vorteilhafte, insbesondere vibrationsarme Verriegelung der Wohnfahrzeugtür erreicht werden.

Ferner wird vorgeschlagen, dass die Antriebseinheit einen elektrischen Antrieb, insbesondere mit einem Elektromotor, umfasst, der konstruktiv einfach und flexibel integriert werden kann.

Weist die Schließvorrichtung wenigstens eine Betätigungseinheit mit einer Sensoreinheit zur Sensierung einer Betätigung auf, können vorteilhaft mechanische Getriebeelemente zur Übertragung einer Betätigungsbewegung und dadurch bedingtes Gewicht vorteilhaft in der Wohnfahrzeugtür zumindest weitgehend vermieden werden.

In einer weiteren Ausgestaltung der Erfindung wird vorgeschlagen, dass die Schließvorrichtung eine Funkeinheit aufweist, die dazu vorgesehen ist, Daten an die Antriebseinheit zu übertragen, und zwar vorzugsweise von einer an der Wohnfahrzeugtür angeordneten Einheit, wie insbesondere einer Betätigungseinheit, und/oder von einer von der Wohnfahrzeugtür und der Wohnfahrzeugseitenwand getrennten, mobilen Einheit, wie insbesondere von einer Schlüsseleinheit. Mittels einer entsprechenden Ausgestaltung können aufwendige Verkabelungen sicher vermieden werden. Grundsätzlich kann jedoch auch eine an der Wohnfahrzeugtür angeordnete Einheit zumindest teilweise mittels Kabel mit einer Schließeinheit und insbesondere mit der Antriebseinheit verbunden sein.

Ferner wird vorgeschlagen, dass die Schließvorrichtung wenigstens eine Sicherheitsentriegelungseinheit zum Öffnen der Wohnfahrzeugtür aufweist. Dabei soll unter einer "Sicherheitsentriegelungseinheit" insbesondere eine Einheit verstanden werden, die zumindest eine andere Energieform zum Öffnen nutzt als bei einem normalen Öffnungsvorgang ohne die Sicherheitsentriegelungseinheit. Insbesondere wird vorzugsweise eine von einem Bediener manuell eingebrachte Energie anstatt einer elektrischen Energie genutzt, um die Wohnfahrzeugtür zu öffnen. Durch eine entsprechende Sicherheitsentriegelungseinheit kann bei einem Energieausfall vorteilhaft sichergestellt werden, dass die Wohnfahrzeugtür stets geöffnet werden kann.

Die Sicherheitsentriegelungseinheit weist dabei vorzugsweise wenigstens einen Bowdenzug auf, wodurch ein Betätigungselement der Sicherheitsentriegelungseinheit besonders flexibel positioniert werden kann.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Wohnmobils von oben mit einer erfindungsgemäßen Wohnfahr- zeugtürvorrichtung und

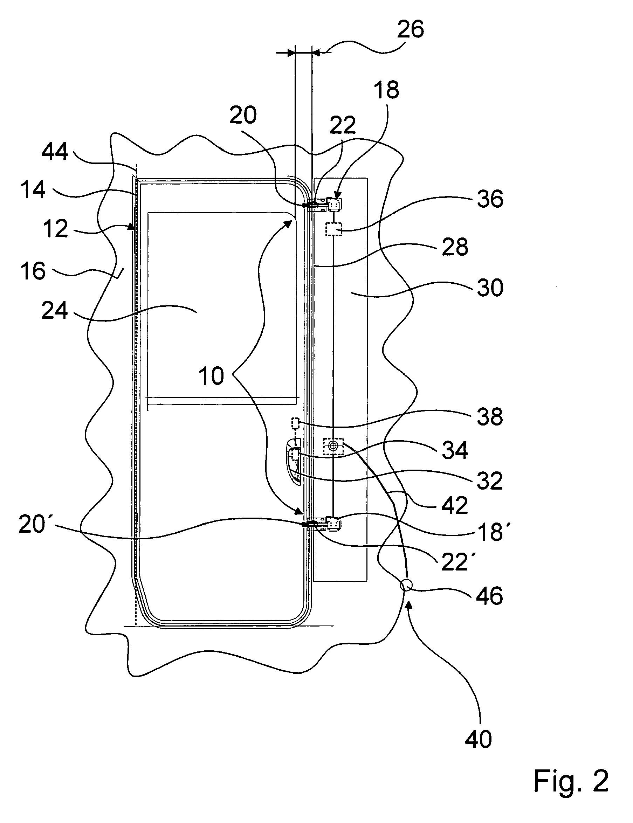

- Fig. 2: einen schematisch dargestellten Ausschnitt ei- ner Seitenansicht des Wohnmobils aus Figur 1.

### Beschreibung des Ausführungsbeispiels

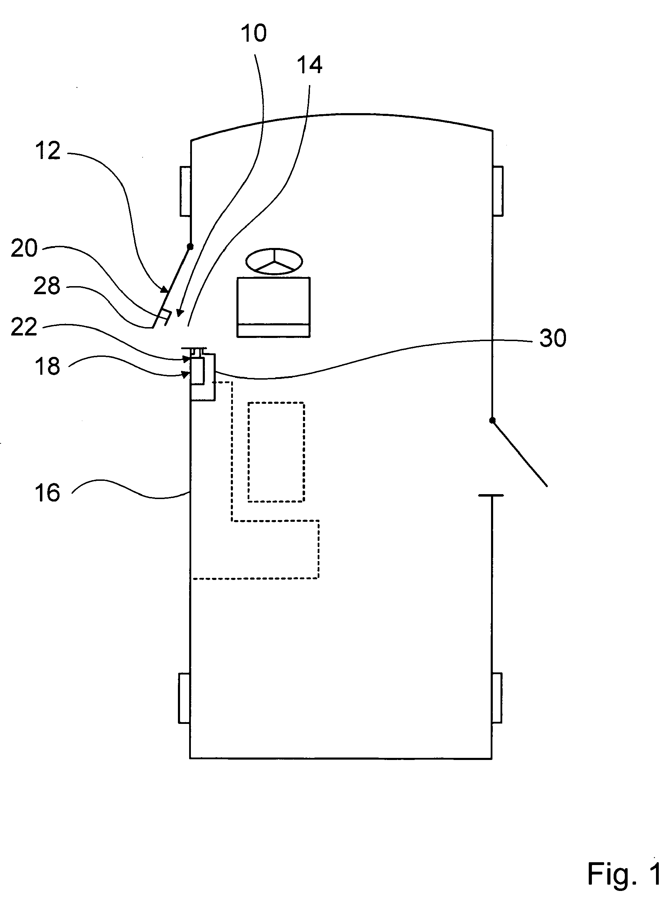

Figur 1 zeigt eine schematische Darstellung eines Wohnmobils von oben mit einer erfindungsgemäßen Wohnfahrzeugtürvorrichtung bzw. mit einer Wohnmobiltürvorrichtung. Die Wohnmobiltürvorrichtung umfasst eine Schließvorrichtung 10, die dazu vorgesehen ist, eine von einer Fahrkabinentür gebildete Wohnfahrzeugtür 12 der Wohnfahrzeugtürvorrichtung, die ein Fensterelement 24 aufweist, in einer Ausnehmung 14 einer Wohnfahrzeugseitenwand 16 zu halten. Die Wohnfahrzeugtürvorrichtung weist dabei zwei jeweils einen Elektromotor umfassende Antriebseinheiten 18, 18' auf, die dazu vorgesehen sind, zwei von Drehfallenschlösser gebildete Schlosseinheiten 22, 22' anzutreiben und damit die Wohnfahrzeugtür 12 über die Drehfallenschlösser in ihre Schließposition zu ziehen.

Die Antriebseinheiten 18, 18' und die Schlosseinheiten 22, 22' sind dazu vorgesehen, an der Wohnfahrzeugseitenwand 16, d.h. außerhalb eines Bereichs der Wohnfahrzeugtür 12 angeordnet zu werden, und sind an der Wohnfahrzeugseitenwand 16 in einem oberen und in einem unteren Bereich der Ausnehmung 14 angeordnet, um an zwei differierende Stellen der Wohnfahrzeugtür 12 formschlüssig Verriegelungen zu bewirken. Die Wohnfahrzeugtürvorrichtung weist zwei an der Wohnfahrzeugtür 12 angeordnete Schlosseinheiten 20, 20' auf, die relativ zur Wohnfahrzeugtür 12 starre Verriegelungsbolzen umfassen und die zur Korrespondenz mit den von den Antriebseinheiten 18, 18' antreibbaren Schlosseinheiten 22, 22' vorgesehen sind.

Aufgrund der Anordnung der Antriebseinheiten 18, 18' und der Schlosseinheiten 22, 22' an der Wohnfahrzeugseitenwand 16 kann das Fensterelement 24 besonders breit bzw. mit einem besonders kleinen Abstand 26 von ca. 40 mm zu einem der Antriebseinheiten 18, 18' zugewandten Seitenrand 28 der Wohnfahrzeugtür 12 ausgeführt werden.

Die Wohnfahrzeugtürvorrichtung umfasst ein im Wesentlichen von einem U-Profil gebildetes Versteifungsmittel 30 zur Versteifung der Wohnfahrzeugseitenwand 16, das sich über ca. 90% der Länge der Ausnehmung 14 bzw. der Wohnfahrzeugtür 12 erstreckt und einstückig mit einem Abdeckmittel ausgeführt ist, das dazu vorgesehen ist, die Antriebseinheiten 18, 18' auf einer Innenseite der Wohnfahrzeugseitenwand 16 abzudecken.

Die Schließvorrichtung 10 umfasst eine von einer Griffeinheit gebildete Betätigungseinheit 32 mit einer von einem Endschalter gebildeten Sensoreinheit 34 zur Sensierung einer Betätigung. Ferner umfasst die Schließvorrichtung 10 eine Funkeinheit 36, 38, die dazu vorgesehen ist, Daten bzw. Signale von der Betätigungseinheit 32 an die Antriebseinheiten 18, 18' zu übertragen.

Wird die Betätigungseinheit 32 von einem Bediener betätigt, wird mittels der Funkeinheit 36, 38 ein Auslösesignal an die Antriebseinheiten 18, 18' übertragen. Die Antriebseinheiten 18, 18' treiben darauf folgend die Drehfallenschlösser automatisch an, die Wohnfahrzeugtür 12 wird entriegelt und kann geöffnet werden. Dabei wird die Wohnfahrzeugtür 12 um eine auf der der Antriebseinheiten 18, 18' abgewandten Seite der Wohnfahrzeugtür 12 angeordnete Schwenkachse 44 geschwenkt.

Wird die Wohnfahrzeugtür 12 von einem Bediener geschlossen und werden die Verriegelungsbolzen der an der Wohnfahrzeugtür 12 angeordneten Schlosseinheiten 20, 20' von einem Bediener in eine erste Raststellung der Drehfallenschlösser geführt, wird die Wohnfahrzeugtür 12 bzw. werden anschließend die Verriegelungsbolzen der Schlosseinheiten 20, 20' mittels der Antriebseinheiten 18, 18' über die Drehfallenschlösser automatisch von der ersten Raststellung in eine zweite Raststellung geführt, und die Wohnfahrzeugtür 12 wird in ihre Schließstellung bewegt.

Um bei Stromausfall die Wohnfahrzeugtür 12 öffnen zu können, weist die Schließvorrichtung eine Sicherheitsentriegelungseinheit 40 mit einem Bowdenzug 42 auf, über den mittels eines hinter einer Klappe verdeckt angeordneten Betätigungsmittels 46 die Drehfallenschlösser entriegelt werden können.

### Bezugszeichen

- 10: Schließvorrichtung
- 12: Wohnfahrzeugtür
- 14: Ausnehmung
- 16: Wohnfahrzeugseitenwand
- 18: Antriebseinheit
- 20: Schlosseinheit
- 22: Schlosseinheit
- 24: Fensterelement
- 26: Abstand
- 28: Seitenrand
- 30: Versteifungsmittel
- 32: Betätigungseinheit
- 34: Sensoreinheit
- 36: Funkeinheit
- 38: Funkeinheit
- 40: Sicherheitsentriege- lungseinheit
- 42: Bowdenzug
- 44: Schwenkachse
- 46: Betätigungsmittel

## Patentansprüche

1. Wohnfahrzeugtürvorrichtung, insbesondere Wohnmobiltürvorrichtung, mit einer Schließvorrichtung (10), die dazu vorgesehen ist, eine Wohnfahrzeugtür (12) in einer Ausnehmung (14) einer Wohnfahrzeugseitenwand (16) zu halten, und die wenigstens eine Antriebseinheit (18) aufweist, die dazu vorgesehen ist, die Wohnfahrzeugtür (12) in ihre Schließposition zu bewegen,
**dadurch gekennzeichnet,**
**dass** die Antriebseinheit (18) dazu vorgesehen ist, an der Wohnfahrzeugseitenwand (16) angeordnet zu werden.

2. Wohnfahrzeugtürvorrichtung nach Anspruch 1,
**gekennzeichnet durch**
eine Wohnfahrzeugtür (12).

3. Wohnfahrzeugtürvorrichtung nach Anspruch 2,
**gekennzeichnet durch**
wenigstens eine an der Wohnfahrzeugtür (12) angeordnete Schlosseinheit (20), die zur Korrespondenz mit einer von der Antriebseinheit (18) antreibbaren Schlosseinheit (22) vorgesehen ist.

4. Wohnfahrzeugtürvorrichtung nach Anspruch 2 oder 3,
**dadurch gekennzeichnet,**
**dass** die Wohnfahrzeugtür (12) ein Fensterelement (24) aufweist.

5. Wohnfahrzeugtürvorrichtung nach Anspruch 4,
**dadurch gekennzeichnet,**
**dass** das Fensterelement (24) einen Abstand (26) zu einem der Antriebseinheit (18) zugewandten Seitenrand (28) der Wohnfahrzeugtür (12) aufweist, der kleiner als 150 mm ist.

6. Wohnfahrzeugtürvorrichtung nach Anspruch 5,
**dadurch gekennzeichnet,**
**dass** das Fensterelement (24) einen Abstand (26) zu dem Seitenrand (28) der Wohnfahrzeugtür (12) aufweist, der kleiner als 80 mm ist.

7. Wohnfahrzeugtürvorrichtung nach Anspruch 6,
**dadurch gekennzeichnet,**
**dass** das Fensterelement (24) einen Abstand (26) zu dem Seitenrand (28) der Wohnfahrzeugtür (12) aufweist, der kleiner als 40 mm ist.

8. Wohnfahrzeugtürvorrichtung zumindest nach Anspruch 2,
**dadurch gekennzeichnet,**
**dass** die Wohnfahrzeugtür (12) eine Fahrkabinentür ist.

9. Wohnfahrzeugtürvorrichtung nach einem der vorhergehenden Ansprüche,
**gekennzeichnet durch**
ein Versteifungsmittel (30) zur Versteifung der Wohnfahrzeugseitenwand (16).

10. Wohnfahrzeugtürvorrichtung nach Anspruch 9,
**dadurch gekennzeichnet,**
**dass** das Versteifungsmittel (30) eine Länge größer als eine halbe Wohnfahrzeugtürlänge der Wohnfahrzeugtür (12) aufweist.

11. Wohnfahrzeugtürvorrichtung nach Anspruch 9 oder 10,
**dadurch gekennzeichnet,**
**dass** das Versteifungsmittel (30) zumindest teilweise einstückig mit einem Abdeckmittel ausgeführt ist, das dazu vorgesehen ist, die Antriebseinheit (18) abzudecken.

12. Wohnfahrzeugtürvorrichtung nach einem der vorhergehenden Ansprüche,
**dadurch gekennzeichnet,**
**dass** die Schließvorrichtung (10) wenigstens ein Drehfallenschloss aufweist und die Antriebseinheit (18) dazu vorgesehen ist, das Drehfallenschloss anzutreiben.

13. Wohnfahrzeugtürvorrichtung nach einem der vorhergehenden Ansprüche,
**dadurch gekennzeichnet,**
**dass** die Schließvorrichtung (10) wenigstens zwei Schlosseinheiten (20, 22) aufweist, die dazu vorgesehen sind, an zumindest zwei differierenden Stellen der Wohnfahrzeugtür (12) formschlüssige Verriegelungen zu bewirken.

14. Wohnfahrzeugtürvorrichtung nach einem der vorhergehenden Ansprüche,
**dadurch gekennzeichnet,**
**dass** die Antriebseinheit (18) einen elektrischen Antrieb umfasst.

15. Wohnfahrzeugtürvorrichtung nach einem der vorhergehenden Ansprüche,
**dadurch gekennzeichnet,**
**dass** die Schließvorrichtung (10) wenigstens eine Betätigungseinheit (32) mit einer Sensoreinheit (34) zur Sensierung einer Betätigung aufweist.

16. Wohnfahrzeugtürvorrichtung nach Anspruch 15,
**dadurch gekennzeichnet,**
**dass** die Schließvorrichtung (10) eine Funkeinheit (36, 38) aufweist, die dazu vorgesehen ist, Daten an die Antriebseinheit (18) zu übertragen.

17. Wohnfahrzeugtürvorrichtung nach einem der vorhergehenden Ansprüche,
**dadurch gekennzeichnet,**
**dass** die Schließvorrichtung (10) wenigstens eine Sicherheitsentriegelungseinheit (40) zum Öffnen der Wohnfahrzeugtür (12) aufweist.

18. Wohnfahrzeugtürvorrichtung nach Anspruch 17,
**dadurch gekennzeichnet,**
**dass** die Sicherheitsentriegelungseinheit (40) wenigstens einen Bowdenzug (42) aufweist.
